(19) Europäisches Patentamt
European Patent Office
Office européen des brevets

(11) Publication number: **0 106 618**
**B1**

(12) # EUROPEAN PATENT SPECIFICATION

(45) Date of publication of patent specification: **10.02.88**

(51) Int. Cl.⁴: **C 08 K 5/34**, C 08 K 5/37, C 08 L 23/02

(21) Application number: **83306005.6**

(22) Date of filing: **04.10.83**

(54) **Stabilizers for synthetic resins.**

(30) Priority: **16.10.82 JP 182006/82**

(43) Date of publication of application: **25.04.84 Bulletin 84/17**

(45) Publication of the grant of the patent: **10.02.88 Bulletin 88/06**

(84) Designated Contracting States: **CH DE FR GB IT LI NL**

(56) References cited:
**EP-A-0 048 841**
**FR-A-2 025 602**
**FR-A-2 127 760**
**GB-A-1 553 810**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Ishii, Tamaki**
**1-12-2, Uchihonmachi**
**Suita Osaka-fu (JP)**
Inventor: **Yachigo, Shinichi**
**2-11-7-305, Sone Higashimachi**
**Toyonaka Osaka-fu (JP)**
Inventor: **Takahashi, Yukoh**
**2-11-8-208, Sone Higashimachi**
**Toyonaka Osaka-fu (JP)**

(74) Representative: **Geering, Keith Edwin et al**
**REDDIE & GROSE 16 Theobalds Road**
**London WC1X 8PL (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 106 618 B1

**Description**

The present invention relates to stabilizers for synthetic resins.

Various synthetic resins including polyolefins such as polyethylene, polypropylene, etc., styrene synthetic resins such as polystyrene, impact resistant polystyrene, ABS, etc., engineering plastics such as polyacetals, polyamides etc., and polyurethanes, are widely used in various fields. However, it is well knwon that these synthetic resins have insufficient inherent stability, tending to deteriorate upon processing or use; the action of heat, light or oxygen can impair their mechanical properties markedly, leaving them soft or brittle or discolored or forming surface cracks.

To treat this problem, it is well known to use various phenolic, phosphite-type or sulfur-containing antioxidants. For example, it is known to use purely phenolic type antioxidants such as 2,6 - di - t - butyl - 4 - methylphenol, 2,2'-methylenebis(4 - methyl - 6 - t - butylphenol), 4,4' - butylidenebis(3 - methyl - 6 - t - butylphenol), n - octadecyl 3 - (3,5 - di - t - butyl - 4 - hydroxyphenyl)propionate, 1,1,3 - tris(2 - methyl - 4 - hydroxy - 5 - t - butylphenyl)butane or tetrakis (3 - 3,5 - di - t - butyl - 4 - hydroxyphenyl)propionyloxymethyl)methane; or to use these phenolic antioxidants together with phosphite-type antioxidants such as tris(nonylphenyl)phosphite or distearylpentaerythritol diphosphite; or to use the above-mentioned phenolic antioxidants in combination with sulfur-containing antioxidants such as dilauryl thiodipropionate, dimyristyl thiodipropionate or distearyl thiodipropionate.

It is also known (from EP—A—48841) to provide a mixture of stabilizers for synthetic resins which comprises an ester of 2 - methyl - 4 - t - butyl - 5 - hydroxyphenyl alkanoic acid (e.g. 1,3,5, - tris{2 - [3 - (2 - methyl - 4 - t - butyl - 5 - hydroxyphenyl) - propionyloxy]ethyl} - isocyanuric acid) in combination with a thioether-type antioxidant (e.g. tetrakis (3 - alkylthiopropionyloxymethyl) methane wherein alkyl is $C_4$ to $C_{20}$).

Further it is known (from FR—A—205602) to provide a mixture of stabilizers comprising 3,9 - bis - (2 - alkylthioethyl) - 2,4,8,10 - tetraoxasprio(5,5)undecane wherein alkyl is $C_3$ to $C_{18}$ in combination with other known stabilizers (e.g. alkyl phenols, aromatic amines, fatty-acid or aliphatic esters containing thioether or mercapto groups, etc.).

However, these methods have not given fully satisfactory stability.

We have found that, by mixing synthetic resins with particular phenolic and particular sulfur-containing compounds, it is possible to obtain surprisingly good stability to heat and oxidation, not to be anticipated from the performance of prior antioxidant combinations.

The present invention provides a stabilizer for synthetic resins, of which the effective component is a mixture composed of a 1,3,5 - tris{2 - [3 - (3 - t - butyl - 4 - hydroxy - 5 - methylphenyl)-propionyloxy]ethyl}isocyanuric acid [phenolic compound (I)] represented by the formula (I):

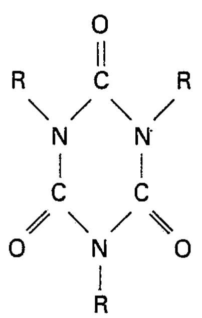

(I)

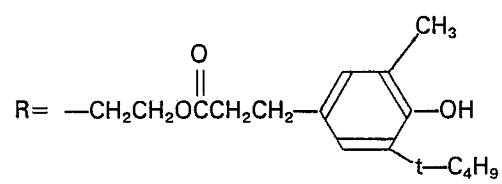

and at least one sulfur-containing compound (II) selected from compounds represented by the general formulae (II-1) and (II-2):

$$(R_1{-}S{-}CH_2CH_2\overset{\overset{\displaystyle O}{\|}}{C}{-}O{-}CH_2)_4C \qquad \text{(II-1)}$$

wherein $R_1$ is an alkyl group having 4 to 20 carbon atoms, and

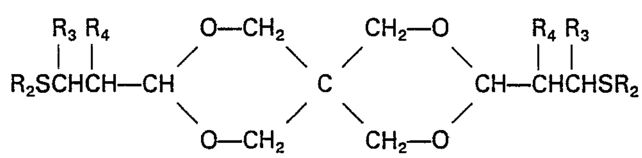

(II-2)

wherein $R_2$ is an alkyl group having 3 to 18 carbon atoms and $R_3$ and $R_4$ are selected independently from hydrogen and alkyl groups having 1 to 6 carbon atoms.

The 1,3,5 - tris{2 - [3 - (3 - t - butyl - 4 - hydroxy - 5 - methylphenyl)propionyloxy]ethyl}isocyanuric

acid may be prepared by the esterification of 3 - (3 - t - butyl - 4 - hydroxy - 5 - methylphenyl)propionic acid with 1,3,5 - tris(2 - hydroxyethyl)isocyanuric acid.

In the compounds represented by the general formula (II-1), i.e. tetrakis(3 - alkyl thiopropionyloxymethyl)methanes, the substituent $R_1$ is preferably an alkyl group having 6 to 18 carbon atoms for giving stability to heat and oxidation, and most preferred is the dodecyl group with 12 carbon atoms.

Representative examples of such compounds are shown in Table 1:

TABLE 1

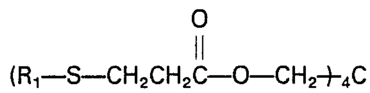

| Compound No. | $R_1$ |
|---|---|
| II-1-1 | $-C_6H_{13}$ |
| II-1-2 | $-C_{12}H_{25}$ |
| II-1-3 | $-C_{18}H_{37}$ |

In the sulfur-containing compounds represented by the general formula (II-2), for giving stability to heat and oxidation, $R_2$ is preferably an alkyl group having 12 to 18 carbon atoms and $R_3$ and $R_4$ are preferably selected independently from hydrogen and alkyl groups of 1 to 3 carbon atoms.

Representative examples of such compounds are shown in Table 2.

TABLE 2

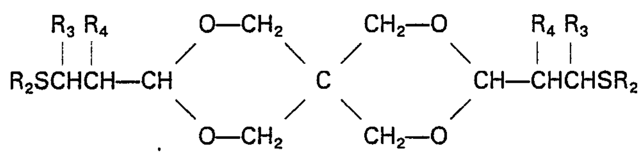

| Compound No. | $R_2$ | $R_3$ | $R_4$ |
|---|---|---|---|
| II-2-1 | $-C_8H_{17}$ | $-CH_3$ | $-H$ |
| II-2-2 | $-C_{12}H_{25}$ | $-C_4H_9$ | $-H$ |
| II-2-3 | $-C_{12}H_{25}$ | $-CH_3$ | $-H$ |
| II-2-4 | $-C_{18}H_{37}$ | $-CH_3$ | $-H$ |
| II-2-5 | $-C_{12}H_{25}$ | $-H$ | $-H$ |
| II-2-6 | $-C_{18}H_{37}$ | $-H$ | $-CH_3$ |

These sulfur-containing compounds (II-2) may be prepared by the acetalization of pentaerythrithol with an aldehyde represented by the general formula:

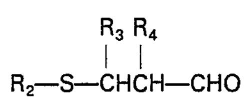

wherein $R_2$, $R_3$ and $R_4$ are as defined above.

In the synthetic resin stabilizer of the present invention the mixing ratio (I):(II) by weight is 1:0.5—15, preferably 1:1—10, and more preferably 1:2—6.

When the total compound (II) amounts to less than 0.5 times the weight of the compound (I), the desired effect may not be fully attained; when it exceeds 15 times, the effect obtained does not increase, and this may be unfavorable economically.

The total amount of the stabilizer to be used in the invention is 0.01—5 weight parts and preferably 0.05—1 weight part for 100 weight parts of the synthetic resin.

The phenolic and sulfur-containing compounds may be mixed separately with the synthetic resin,

rather than being mixed together first. For this, any suitable apparatus and method known for the addition of stabilizer, pigment, filler, etc. to a synthetic resin may be used.

The stabilizers of the present invention may be used with other additives, for example, ultraviolet absorbers, light stabilizers, antioxidants, metal deactivators, metallic soaps, nucleating agents, lubricants, antistatic agents, flame retardants, pigments and fillers.

The resistance to light of a synthetic resin can be improved by using the stabilizer of the present invention together with ultraviolet absorber hindered amine type light-stabilizers, etc. for example, 2 - hydroxy - 4 - methoxybenzophenone, 2 - hydroxy - 4 - n - octoxybenzophenone, 2(2 - hydroxy - 5 - methylphenyl)benzotriazole, 2(2 - hydroxy - 3 - t - butyl - 5 - methylphenyl) - 5 - chlorobenzotriazole, 2(2 - hydroxy - 3,5 - di - t - butylphenyl) - 5 - chlorobenzotriazole, 2(2 - hydroxy - 3,5 - di - amylphenyl)benzotriazole, [2,2' - thiobis(4 - t - octylphenolate)] - butylamine nickel salt, 2,2,6,6 - tetramethyl - 4 - piperidinyl benzoate, bis(2,2,6,6 - tetramethyl - 4 - piperidinyl)sebacate, bis(1,2,2,6,6 - pentamethyl - 4 - piperidyl) 2 - (3,5 - di - t - butyl - 4 - hydroxybenzyl) - 2 - n - butyl - malonate, 1 - [2 - {3 - (3,5 - di - t - butyl - 4 - hydroxyphenyl)propionyloxy}ethyl] - 4 - [3 - (3,5 - di - t - butyl - 4 - hydroxyphenyl)propionyloxy] - 2,2,6,6 - tetramethylpiperidine, and dimethyl succinate/1 - (2 - hydroxyethyl) - 4 - hydroxy - 2,2,6,6 - tetramethylpiperidine condensation product.

By using the stabilizers of the present invention together with other phosphite-type antioxidants, the color of synthetic resins can be improved. Such phosphite-type antioxidants include, for example, distearylpentaerythritol diphosphite, tris(2,4 - di - t - butylphenyl)phosphite, tris(2 - t - butyl - 4 - methylphenyl)phosphite, bis(2,4 - di - t - butylphenyl)pentaerythritol diphosphite, and tetrakis (2,4 - di - t - butylphenyl) - 4,4' - biphenylene diphosphite.

The stabilizers of the present invention can improve the stability of synthetic resins including e.g. low density polyethylene, high density polyethylene, linear low density polyethylene, chlorinated polyethylene, EVA resin, polypropylene, polyvinyl chloride, methacrylic resin, polystyrene, impact resistant polystyrene, ABS resin, AES resin, MBS resin, polyethylene terephthalate, polybutylene terephthalate, polyamide, polyimide, polycarbonate, polyacetal, polyurethane, and unsaturated polyester resin. The stabilizers are effective particularly for polypropylene.

The invention is illustrated by the following Preparation and Examples, which in no way limit the scope of the invention. The Examples include Runs which are according to the invention and Comparison Runs which are not.

Preparation

Production of 1,3,5 - tris{2 - [3 - (3 - t - butyl - 4 - hydroxy - 5 - methylphenyl)propionyloxy]ethyl}-isocyanuric acid i.e. phenolic compound (I)

In a 500 ml 4-necked flask fitted with a thermometer, stirrer and Dean-Stalk trap, there were charged 7.84 g (0.03 mol) of 1,3,5 - tris(hydroxyethyl)isocyanuric acid, 23.39 g (0.099 mol) of 3 - (3 - t - butyl - 4 - hydroxy - 5 - methylphenyl)propionic acid and 200 ml of toluene. After purging with nitrogen gas, there was added 1.14 g (0.006 mol) of p-toluenesulfonic acid. While stirring the mixture was heated and the reaction was conducted at 112°C. for 5 hours, during which water developed upon azeotropic distillation was trapped with the Dean-Stalk trap in order to prevent the same from flowing back to the reaction system.

After the reaction the mixture was cooled to room temperature and the toluene layer was washed three times with 150 ml of 5% aqueous solution of sodium carbonate and further washed three times with 150 ml water. Upon distillation of toluene, there was obtained 27.0 g (Yield 98.2%) of 1,3,5 - tris{2 - [3 - (3 - t - butyl - 4 - hydroxy - 5 - methylphenyl)propionyloxy]ethyl}isocyanuric acid in the form of light brown glass-like solid.

Elemental analysis as $C_{51}H_{69}N_3O_{12}$

Calculated: C 66.86%, H 7.59%, N 4.59%
Found : C 66.76%, H 7.70%, N 4.62%

Mass analysis (FD-mass)

$(M+1)^+$ peak 916

$^1$H-NMR(CD $Cl_3$, TMS, 60 MHz)

| | |
|---|---|
| δ 1.37 | (27H s) |
| δ 2.16 | ( 9H s) |
| δ 2.69 | (12H m) |
| δ 4.25 | (12H br.s) |
| δ 4.83 | ( 3H br.s) |
| δ 6.82 | ( 3H br.s) |
| δ 6.94 | ( 3H br.s) |

Example 1

The following components were mixed for 5 minutes with a mixer, and melt-kneaded with a mixing roll at 180°C. The compound thus obtained was formed by a heated press of 210°C. into a sheet 1 mm thick.

A test piece of the dimensions of 40×40×1 mm was produced. The time until 30 % of the area of the test piece becomes brittle in a gear oven at 160°C. was measured. This time period was determined as the induction period to embrittlement, by which the stability to heat and oxidation was evaluated. The results are shown in Table 3.

Components:

| | |
|---|---|
| Non-stabilized polypropylene resin | 100 weight parts |
| Calcium stearate | 0.1 weight part |
| Test compound | variable |

In Table 3, the A0 abbreviations represent the following compounds:

A0-1 n-octadecyl 3-(3,5-di-tert-butyl-4-hydroxyphenyl)propionate,
A0-2 tetrakis[3 - (3,5 - di - t - butyl - 4 - hydroxyphenyl)propionyloxymethyl]methane,
A0-3 1,3,5 - tris{2 - [3 - (3,5 - di - t - butyl - 4 - hydroxyphenyl)propionyloxy]ethyl}isocyanuric acid,
A0-4 1,1,3-tris(2-methyl-4-hydroxy-5-t-butylphenyl)butane,
A0-5 dilauryl thiodipropionate,
A0-6 distearyl thiodipropionate.

In Table 3, and also Tables 4 and 5, the amounts of test compound are in wt. parts per 100 wt. parts of resin solid.

TABLE 3

| | Test compound | Run 1 | 2 | 3 | 4 | 5 | 6 | 7 |
|---|---|---|---|---|---|---|---|---|
| | I | 0.05 | 0.05 | 0.05 | 0.05 | 0.05 | 0.05 | 0.05 |
| Phenolic | A0-1 | | | | | | | |
| | A0-2 | | | | | | | |
| | A0-3 | | | | | | | |
| | A0-4 | | | | | | | |
| Sulfur-containing | II-1-1 | 0.2 | | | | | | |
| | II-1-2 | | 0.1 | 0.2 | 0.3 | | | |
| | II-1-3 | | | | | 0.2 | | |
| | II-2-1 | | | | | | 0.2 | |
| | II-2-2 | | | | | | | 0.2 |
| | II-2-3 | | | | | | | |
| | II-2-4 | | | | | | | |
| | II-2-5 | | | | | | | |
| | II-2-6 | | | | | | | |
| | A0-5 | | | | | | | |
| | A0-6 | | | | | | | |
| | Induction period to embrittlement (hours) | 1100 | 995 | 1480 | 1800 | 1230 | 1120 | 1240 |

TABLE 3 (cont'd)

| | Test compound | Run 8 | 9 | 10 | 11 | 12 | 13 |
|---|---|---|---|---|---|---|---|
| | I | 0.05 | 0.05 | 0.05 | 0.05 | 0.05 | 0.05 |
| Phenolic | A0-1 | | | | | | |
| Phenolic | A0-2 | | | | | | |
| Phenolic | A0-3 | | | | | | |
| | A0-4 | | | | | | |
| Sulfur-containing | II-1-1 | | | | | | |
| Sulfur-containing | II-1-2 | | | | | | |
| Sulfur-containing | II-1-3 | | | | | | |
| Sulfur-containing | II-2-1 | | | | | | |
| Sulfur-containing | II-2-2 | | | | | | |
| Sulfur-containing | II-2-3 | 0.2 | | | | | |
| Sulfur-containing | II-2-4 | | 0.1 | 0.2 | 0.3 | | |
| Sulfur-containing | II-2-5 | | | | | 0.2 | |
| Sulfur-containing | II-2-6 | | | | | | 0.2 |
| | A0-5 | | | | | | |
| | A0-6 | | | | | | |
| | Induction period to embrittlement (hours) | 1300 | 980 | 1420 | 1720 | 1300 | 1390 |

TABLE 3 (cont'd)

| | Test compound | Comparison run 14 | 15 | 16 | 17 | 18 | 19 | 20 |
|---|---|---|---|---|---|---|---|---|
| Phenolic | I | 0.05 | | | | | | |
| | A0-1 | | 0.05 | | | | | |
| | A0-2 | | | 0.05 | | | | |
| | A0-3 | | | | 0.05 | | | |
| | A0-4 | | | | | 0.05 | | |
| Sulfur-containing | II-1-1 | | | | | | 0.2 | |
| | II-1-2 | | | | | | | 0.2 |
| | II-1-3 | | | | | | | |
| | II-2-1 | | | | | | | |
| | II-2-2 | | | | | | | |
| | II-2-3 | | | | | | | |
| | II-2-4 | | | | | | | |
| | II-2-5 | | | | | | | |
| | II-2-6 | | | | | | | |
| | A0-5 | | | | | | | |
| | A0-6 | | | | | | | |
| | Induction period to embrittlement (hours) | 140 | 30 | 50 | 45 | 25 | 30 | 30 |

TABLE 3 (cont'd)

| | Test compound | Comparison run 21 | 22 | 23 | 24 | 25 | 26 | 27 |
|---|---|---|---|---|---|---|---|---|
| Phenolic | I | | | | | | | |
| | A0-1 | | | | | | | |
| | A0-2 | | | | | | | |
| | A0-3 | | | | | | | |
| | A0-4 | | | | | | | |
| Sulfur-containing | II-1-1 | | | | | | | |
| | II-1-2 | | | | | | | |
| | II-1-3 | 0.2 | | | | | | |
| | II-2-1 | | 0.2 | | | | | |
| | II-2-2 | | | 0.2 | | | | |
| | II-2-3 | | | | 0.2 | | | |
| | II-2-4 | | | | | 0.2 | | |
| | II-2-5 | | | | | | 0.2 | |
| | II-2-6 | | | | | | | 0.2 |
| | A0-5 | | | | | | | |
| | A0-6 | | | | | | | |
| | Induction period to embrittlement (hours) | 20 | 20 | 20 | 20 | 20 | 20 | 20 |

TABLE 3 (cont'd)

| | Test compound | Comparison run 28 | 29 | 30 | 31 | 32 | 33 | 34 |
|---|---|---|---|---|---|---|---|---|
| | I | | | 0.05 | 0.05 | | | |
| Phenolic | A0-1 | | | | | 0.05 | 0.05 | 0.05 |
| Phenolic | A0-2 | | | | | | | |
| Phenolic | A0-3 | | | | | | | |
| Phenolic | A0-4 | | | | | | | |
| Sulfur-containing | II-1-1 | | | | | | | |
| Sulfur-containing | II-1-2 | | | | | 0.2 | | |
| Sulfur-containing | II-1-3 | | | | | | | |
| Sulfur-containing | II-2-1 | | | | | | | |
| Sulfur-containing | II-2-2 | | | | | | | |
| Sulfur-containing | II-2-3 | | | | | | | |
| Sulfur-containing | II-2-4 | | | | | | 0.2 | |
| Sulfur-containing | II-2-5 | | | | | | | |
| Sulfur-containing | II-2-6 | | | | | | | |
| Sulfur-containing | A0-5 | 0.2 | | 0.2 | | | | |
| Sulfur-containing | A0-6 | | 0.2 | | 0.2 | | | 0.2 |
| | Induction period to embrittlement (hours) | 15 | 15 | 440 | 560 | 310 | 320 | 330 |

TABLE 3 (cont'd)

| | Test compound | Comparison run 35 | 36 | 37 | 38 | 39 | 40 | 41 |
|---|---|---|---|---|---|---|---|---|
| | I | | | | | | | |
| Phenolic | A0-1 | | | | | | | |
| Phenolic | A0-2 | 0.05 | 0.05 | 0.05 | 0.05 | 0.05 | 0.05 | 0.05 |
| Phenolic | A0-3 | | | | | | | |
| Phenolic | A0-4 | | | | | | | |
| Sulfur-containing | II-1-1 | | | | | | | |
| Sulfur-containing | II-1-2 | 0.2 | 0.3 | | | | | |
| Sulfur-containing | II-1-3 | | | | | | | |
| Sulfur-containing | II-2-1 | | | | | | | |
| Sulfur-containing | II-2-2 | | | 0.2 | | | | |
| Sulfur-containing | II-2-3 | | | | | | | |
| Sulfur-containing | II-2-4 | | | | 0.2 | 0.3 | | |
| Sulfur-containing | II-2-5 | | | | | | | |
| Sulfur-containing | II-2-6 | | | | | | | |
| Sulfur-containing | A0-5 | | | | | | 0.2 | 0.3 |
| Sulfur-containing | A0-6 | | | | | | | |
| | Induction period to embrittlement (hours) | 400 | 480 | 390 | 440 | 530 | 450 | 500 |

TABLE 3 (cont'd)

| | Test compound | Comparison run 42 | 43 | 44 | 45 | 46 | 47 | 48 |
|---|---|---|---|---|---|---|---|---|
| Phenolic | I | | | | | | | |
| | A0-1 | | | | | | | |
| | A0-2 | 0.05 | 0.05 | | | | | |
| | A0-3 | | | 0.05 | 0.05 | 0.05 | 0.05 | 0.05 |
| | A0-4 | | | | | | | |
| Sulfur-containing | II-1-1 | | | | | | | |
| | II-1-2 | | | 0.2 | 0.3 | | | |
| | II-1-3 | | | | | | | |
| | II-2-1 | | | | | | | |
| | II-2-2 | | | | | | | |
| | II-2-3 | | | | | | | |
| | II-2-4 | | | | | 0.2 | 0.3 | |
| | II-2-5 | | | | | | | |
| | II-2-6 | | | | | | | |
| | A0-5 | | | | | | | 0.2 |
| | A0-6 | 0.2 | 0.3 | | | | | |
| | Induction period to embrittlement (hours) | 750 | 820 | 380 | 440 | 420 | 500 | 400 |

TABLE 3 (cont'd)

| | Test compound | Comparison run 49 | 50 | 51 | 52 | 53 | 54 |
|---|---|---|---|---|---|---|---|
| | I | | | | | | NON-ADDITION |
| Phenolic | A0-1 | | | | | | |
| | A0-2 | | | | | | |
| | A0-3 | 0.05 | 0.05 | | | | |
| | A0-4 | | | 0.05 | 0.05 | 0.05 | |
| Sulfur-containing | II-1-1 | | | | | | |
| | II-1-2 | | | 0.2 | | | |
| | II-1-3 | | | | | | |
| | II-2-1 | | | | | | |
| | II-2-2 | | | | | | |
| | II-2-3 | | | | | | |
| | II-2-4 | | | | 0.2 | | |
| | II-2-5 | | | | | | |
| | II-2-6 | | | | | | |
| | A0-5 | | | | | | |
| | A0-6 | 0.2 | 0.3 | | | 0.2 | |
| | Induction period to embrittlement | 410 | 470 | 510 | 430 | 390 | 5 |

Example 2

To a graft ABS latex, suspensions, produced by bead-peptization with an anionic surface-active agent, of the test compounds shown in Table 4 were added in amounts shown in Table 4. In the usual way, the mixture was salted out with an aqueous magnesium sulfate solution, and the resulting precipitate was filtered, washed with water and dried. The stability to heat and oxidation was evaluated by the following methods, using the ABS resin powder thus obtained as the test material. The results are shown in Table 4.

1. After heat-aging in a gear oven at 180°C., the degree of discoloration of the ABS resin was observed.

2. The oxygen absorption induction period (I.P.) was measured in an oxygen atmosphere at 170°C., using an oxygen absorption induction period measuring apparatus.

3. The ABS resin powder was extruded repeatedly using a small extruder (screw D=20 mm ϕ, L/D=25, strand die D=3 mm ϕ, L/D=10) under the following conditions. The degree of discoloration of the ABS pellets of the fourth extrusion was evaluated by the color difference ΔYI from the non-addition ABS pellets of the first extrusion.

Extrusion condition:

Rotation: 40 rpm

| Temperature: | $C_1$ | $C_2$ | $C_3$ | D |
|---|---|---|---|---|
| | 220° | 240° | 260° | 280°C. |

4. The ABS pellets after the fourth extrusion obtained in the above-mentioned method of paragraph 3 were compression-molded at 180°C. for 10 minutes to prepare a No. 1 Test Piece specified in JIS K 7111. By using a Charpy impact testing machine, the Charpy impact value of the Test Piece was measured, following JIS K 7111.

In Table 4, A0-7 is the following compound.

A0-7: 2,6-di-t-butyl-4-methylphenol.

TABLE 4

| | Test compound | Run 1 | 2 | 3 | 4 | 5 | 6 |
|---|---|---|---|---|---|---|---|
| Phenolic | I | 0.5 | 0.5 | 0.5 | 0.5 | 0.5 | 0.5 |
| | A0-3 | | | | | | |
| | A0-7 | | | | | | |
| Sulfur-containing | II-1-2 | 0.5 | 1.0 | | | | |
| | II-2-4 | | | 0.5 | 1.0 | | |
| | II-2-5 | | | | | 0.5 | 1.0 |
| | A0-5 | | | | | | |
| Discoloration | after 30 min. | light yellow | light yellow | light yellow | light yellow | light yellow | light yellow |
| | after 60 min. | yellow brown | yellow brown | yellow brown | yellow brown | yellow brown | yellow brown |
| Oxygen absorption induction period (min.) | | 200 | 265 | 195 | 250 | 200 | 255 |
| ΔYI | | 11.0 | 11.3 | 11.2 | 11.6 | 11.1 | 11.5 |
| Charpy impact value ($J/mm^2$) | | 206 | 212 | 196 | 203 | 201 | 207 |

TABLE 4 (cont'd)

| | Test compound | Run 7 | 8 | 9 | 10 | 11 |
|---|---|---|---|---|---|---|
| Phenolic | I | 0.5 | 1.0 | 0.5 | 0.5 | |
| | A0-3 | | | | | 0.5 |
| | A0-7 | | | | | |
| Sulfur-containing | II-1-2 | | | | | |
| | II-2-4 | | | | | |
| | II-2-5 | | | | | |
| | A0-5 | | | 0.5 | 1.0 | |
| Discoloration | after 30 min. | deep brown | yellow brown | yellow brown | yellow brown | deep brown |
| | after 60 min. | black brown | deep brown | brown | brown | black brown |
| Oxygen absorption induction period (min.) | | 135 | 155 | 140 | 155 | 135 |
| ΔYI | | 14.9 | 14.7 | 14.9 | 15.4 | 15.5 |
| Charpy impact value ($J/mm^2$) | | 111 | 127 | 115 | 132 | 108 |

TABLE 4 (cont'd)

| | Test compound | Comparison run 12 | 13 | 14 | 15 | 16 |
|---|---|---|---|---|---|---|
| Phenolic | I | | | | | |
| | A0-3 | 1.0 | 0.5 | 0.5 | 0.5 | 0.5 |
| | A0-7 | | | | | |
| Sulfur-containing | II-1-2 | | 0.5 | 1.0 | | |
| | II-2-4 | | | | 0.5 | |
| | II-2-5 | | | | | 0.5 |
| | A0-5 | | | | | |
| Discoloration after 30 min. | | yellow brown | yellow brown | yellow brown | yellow brown | yellow brown |
| after 60 min. | | deep brown | brown | brown | brown | brown |
| Oxygen absorption induction period (min.) | | 155 | 145 | 150 | 145 | 145 |
| ΔYI | | 14.1 | 15.2 | 15.5 | 14.5 | 14.8 |
| Charpy impact value ($J/mm^2$) | | 128 | 123 | 129 | 123 | 121 |

TABLE 4 (cont'd)

| | Test compound | Comparison run 17 | 18 | 19 | 20 | 21 |
|---|---|---|---|---|---|---|
| Phenolic | I | | | | | |
| | A0-3 | 0.5 | 0.5 | 0.5 | | |
| | A0-7 | | | | 1.0 | 0.5 |
| Sulfur-containing | II-1-2 | | | | | 0.5 |
| | II-2-4 | | | | | |
| | II-2-5 | 1.0 | | | | |
| | A0-5 | | 0.5 | 1.0 | | |
| Discoloration after 30 min. | | yellow brown | yellow brown | yellow brown | yellow brown | deep brown |
| after 60 min. | | brown | brown | brown | brown | black brown |
| Oxygen absorption induction period (min.) | | 150 | 145 | 150 | 145 | 150 |
| ΔYI | | 15.2 | 14.9 | 15.7 | 13.2 | 14.5 |
| Charpy impact value ($J/mm^2$) | | 123 | 116 | 127 | 125 | 122 |

TABLE 4 (cont'd)

| | Test compound | Comparison run 22 | 23 | 24 | 25 |
|---|---|---|---|---|---|
| Phenolic | I | | | | NON-ADDITION |
| | A0-3 | | | | |
| | A0-7 | 0.5 | 0.5 | 0.5 | |
| Sulfur-containing | II-1-2 | | | | |
| | II-2-4 | 0.5 | | | |
| | II-2-5 | | 0.5 | | |
| | A0-5 | | | 0.5 | |
| Discoloration | after 30 min. | deep brown | deep brown | deep brown | deep brown |
| | after 60 min. | black brown | black brown | black brown | black brown |
| Oxygen absorption induction period (min.) | | 150 | 150 | 140 | 10 |
| ΔYI | | 14.6 | 14.8 | 15.0 | 15.9 |
| Charpy impact value ($J/mm^2$) | | 123 | 122 | 115 | 71 |

Example 3

To a 25% urethane dope (prepared from 25 parts of urethane resin, 3.75 parts of dimethylformamide and 71.25 parts of tetrahydrofuran), each of the test compounds shown in Table 5 was added in an amount by weight parts shown in Table 5 for 100 weight parts of the above-mentioned polyurethane. Thereafter, the resulting dope was coated in 1.2 mm thickness on a polyester film, and was dried at 45°C. for one hour in a drier. The sheet thus obtained was punched out into test pieces by a No. 3 Dumbell.

After irradiated with light for 60 hours and 120 hours in a Fade-O-Meter (light source: UV carbon arc; black panel temperature: 63±3°C.), the test pieces were subjected to a tensile test (tensile speed: 200 mm/min; measurement temperature: 25°C.) to obtain the retention ratio of break strength. The results are shown in Table 5.

TABLE 5

| | Test Compound | Run 1 | 2 | 3 | 4 | 5 | 6 | Comparison run 7 | 8 | 9 | 10 | 11 | 12 |
|---|---|---|---|---|---|---|---|---|---|---|---|---|---|
| Phenolic | I | 0.5 | 0.5 | 0.5 | 0.5 | 0.5 | 0.5 | 0.5 | 1.0 | 0.5 | 0.5 | | |
| | A0-1 | | | | | | | | | | | 0.5 | 0.5 |
| | A0-3 | | | | | | | | | | | | |
| Sulfur-containing | II-1-2 | 0.5 | 1.0 | | | | | | | | | | 0.5 |
| | II-2-4 | | | 0.5 | 1.0 | | | | | | | | |
| | II-2-5 | | | | | 0.5 | 1.0 | | | | | | |
| | A0-5 | | | | | | | | | 0.5 | 1.0 | | |
| Break strength retention (%) | 60 hours | 56 | 59 | 54 | 56 | 55 | 57 | 35 | 37 | 35 | 36 | 31 | 32 |
| | 120 hours | 38 | 41 | 35 | 39 | 38 | 40 | 19 | 22 | 21 | 22 | 17 | 18 |

TABLE 5 (cont'd)

| | Test compound | Comparison run 13 | 14 | 15 | 16 | 17 | 18 | 19 | 20 | 21 | 22 | 23 | 24 |
|---|---|---|---|---|---|---|---|---|---|---|---|---|---|
| Phenolic | I | | | | | | | | | | | | Non-addition |
| | A0-1 | 0.5 | 0.5 | 0.5 | | | | | | | | | |
| | A0-3 | | | | 0.5 | 1.0 | 0.5 | 0.5 | 0.5 | 0.5 | 0.5 | 0.5 | |
| Sulfur-containing | II-1-2 | | | | | | 0.5 | 1.0 | | | | | |
| | II-2-4 | 0.5 | | | | | | | 0.5 | | | | |
| | II-2-5 | | 0.5 | | | | | | | 0.5 | 1.0 | | |
| | A0-5 | | | 0.5 | | | | | | | | 0.5 | |
| Break strength retention (%) | 60 hours | 32 | 32 | 32 | 34 | 37 | 35 | 37 | 35 | 35 | 36 | 35 | 30 |
| | 120 hours | 17 | 18 | 18 | 19 | 22 | 20 | 20 | 19 | 20 | 21 | 19 | 16 |

**Claims**

1. A stabilizer for synthetic resins, characterised in that its effective ingredient is a mixture of 1,3,5 - tris{2 - [3 - (3 - t - butyl - 4 - hydroxy - 5 - methylphenyl)propionyloxy]ethyl}isocyanuric acid (I) and at least one sulfur-containing compound (II) selected from compounds represented by the general formulae (II-1) and (II-2):

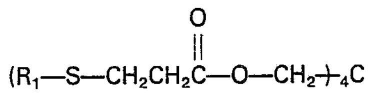

(II-1)

wherein $R_1$ is an alkyl group having 4 to 20 carbon atoms, and

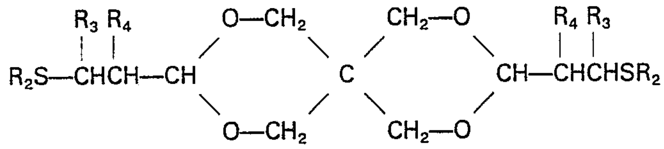

(II-2)

wherein $R_2$ is an alkyl group having 3 to 18 carbon atoms, and $R_3$ and $R_4$ are selected independently from hydrogen and alkyl groups having 1 to 6 carbon atoms, the weight ratio (I):(II) being from 1:0.5 to 1:15, and the amount of stabiliser to be used being 0.01—5 parts by weight based on 100 parts of synthetic resin.

2. A stabiliser according to claim 1 characterised in that it includes tetrakis(3 - dodecylthiopropionyloxymethyl)methane.

3. A stabiliser according to claim 1 or 2 characterised in that it includes 3,9 - bis(2 - dodecylthioethyl) - 2,4,8,10 - tetraoxaspiro[5,5]undecane.

4. A synthetic resin incorporating a stabiliser according to any preceding claim.

5. A polyolefin, e.g. polypropylene, incorporating a stabiliser according to any preceding claim.

**Patentansprüche**

1. Stabilisator für synthetische Harze, dadurch gekennzeichnet, daß sein wirksamer Bestandteil eine Mischung ist aus 1,3,5 - Tris{2 - [3 - (3 - t - butyl - 4 - hydroxy - 5 - methylphenyl) - propionyloxy]-ethyl}isocyanursäure (I) und wenigstens einer Schwefel enthaltenden Verbindung (II), ausgewählt aus Verbindungen der allgemeinen Formeln (II-1) und (II-2):

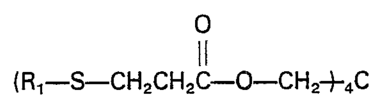

(II-1)

worin $R_1$ eine Alkylgruppe mit 4 bis 20 Kohlenstoffatomen ist, und

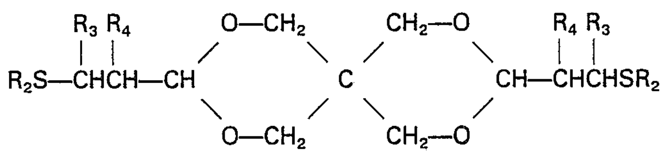

(II-2)

worin $R_2$ eine Alkylgruppe mit 3 bis 18 Kohlenstoffatomen ist und $R_3$ und $R_4$ unanbhängig voneinander ausgewält sind aus Wasserstoff und Alkylgruppen mit 1 bis 6 Kohlenstoffatomen, wobei das Gewichtsverhältnis (I):(II) 1:0,5 bis 1:15 beträgt und die Menge des verwendeten Stabilisierungsmittels 0,01 bis 5 Gewichtsteile, bezogen auf 100 Teile des synthetischen Harzes, beträgt.

2. Stabilisator nach Anspruch 1, dadurch gekennzeichnet, daß er Tetrakis (3 - dodecylthiopropionyloxymethyl)methan enthält.

3. Stabilisator nach Anspruch 1 oder 2, dadurch gekennzeichnet, daß er 3,9 - Bis(2 - dodecylthioethyl) - 2,4,8,10 - tetraoxaspiro[5,5]undecan enthält.

4. Synthetisches Harz, das einen Stabilisator gemäß einem der vorhergehenden Ansprüche enthält.

5. Polyolefin, beispielsweise Polypropylen, das einen Stabilisator gemäß einem der vorhergehenden Ansprüche enthält.

**Revendications**

1. Stabilisant pour résines synthétiques, caractérisé en ce que son ingrédient efficace est un mélange d'acide 1,3,5 - tris - {2 - [3 - (3 - tertio - butyl - 4 - hydroxy - 5 - méthylphényl)propionyloxy) - éthyl} -

iso cyanurique (I) et d'au moins un composé contenant du soufre (II) choisi entre des composés représentés par les formules générales (II-1) et (II-2):

$$(R_1—S—CH_2CH_2\overset{\overset{O}{||}}{C}—O—CH_2)_4C \qquad (II\text{-}1)$$

formule dans laquelle $R_1$ est un groupe alkyle ayant 4 à 20 atomes de carbone, et

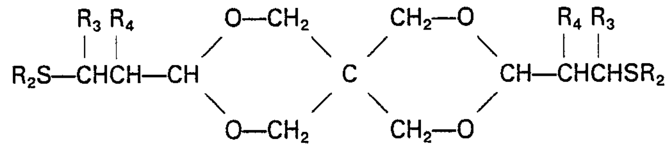

(II-2)

formule dans laquelle $R_2$ est un groupe alkyle ayant 3 à 18 atomes de carbone, et $R_3$ et $R_4$ sont choisis indépendamment entre l'hydrogène et des groupes alkyle ayant 1 à 6 atomes de carbone, le rapport pondéral (I):(II) étant compris entre 1:0,5 et 1:15, et la quantité de stabilisant à utiliser étant comprise entre 0,01 et 5 parties en poids, pour 100 parties de résine synthétique.

2. Stabilisant suivant la revendication 1, caractérisé en ce qu'il comprend du tétrakis - (3 - dodécylthiopropionyloxyméthyl)méthane.

3. Stabilisant suivant la revendication 1 ou 2, caractérisé en ce qu'il comprend du 3,9 - bis(2 - dodécylthioéthyl) - 2,4,8,10 - tétra - oxaspiro - [5,5]undécane.

4. Résine synthétique à laquelle un stabilisant suivant l'une quelconque des revendications précédentes est incorporé.

5. Polyoléfine, par exemple le polypropylène, à laquelle un stabilisant suivant l'une quelconque des revendications précédentes est incorporé.